# EUROPÄISCHE PATENTSCHRIFT

(11) **EP 3 357 152 B1**
(45) Veröffentlichungstag und Bekanntmachung des Hinweises auf die Patenterteilung: **04.08.2021**
(21) Anmeldenummer: 16774685.8
(22) Anmeldetag: 30.09.2016
(51) Int. Cl.: H02M 3/158, H02M 1/00

(54) **VERFAHREN ZUM ANSTEUERN EINES MULTIPHASIGEN SYNCHRONWANDLERS**
METHOD FOR ACTUATING A MULTI-PHASE SYNCHRONOUS CONVERTER
PROCÉDÉ DE COMMANDE D'UN CONVERTISSEUR SYNCHRONE À MULTIPLES PHASES

(30) Priorität: 01.10.2015 AT 508292015
(43) Veröffentlichungstag der Anmeldung: 08.08.2018
(73) Patentinhaber: AVL List GmbH, 8020 Graz (AT)
(72) Erfinder: PERPETUO CORREA, Tomas, 3060-455 Ourenta (PT); GREUL, Roland, 8020 Graz (AT); KÖNIG, Oliver, 8042 Graz (AT)
(74) Vertreter: Patentanwälte Pinter & Weiss OG
(86) Internationale Anmeldenummer: PCT/EP2016/073405
(87) Internationale Veröffentlichungsnummer: WO 2017/055534

(56) Entgegenhaltungen:
- EP-A1- 2 439 837
- DE-A1-102013 107 792
- US-A1- 2013 229 829
- US-B1- 6 281 666

## Beschreibung

Die gegenständliche Erfindung behandelt ein Verfahren zum Ansteuern eines multiphasigen Synchronwandlers, bestehend aus mehreren Halbbrücken wiederum bestehend aus jeweils einem oberen Leistungsschalter und jeweils einem unteren Leistungsschalter, durch eine Pulsweitenmodulation abhängig von einem vorgegebenen Tastgrad im Bereich von null bis hundert Prozent, wobei vom Synchronwandler ein Ausgangsstrom erzeugt wird und der multiphasige Synchronwandler in einem Normalmodus betrieben wird, in dem die Leistungsschalter mit einer durch eine vorgegebene Normalschaltfrequenz definierte Normalschaltperiode und einer vom aktuellen Tastgrad abhängigen Normalplusdauer schalten, wobei sobald der Tastgrad eine erste obere Tastgradschwelle überschreitet oder eine erste untere Tastgradschwelle unterschreitet, vom Normalmodus in einen Betriebsmodus geschaltet wird, in dem zumindest einer der Leistungsschalter zumindest einer Halbbrücke über einen Zeitraum, der größer als die Normalschaltperiode ist, permanent deaktiviert wird.

Um Gleichspannungen in andere Gleichspannungsbereiche zu transformieren sind diverse Gleichspannungswandler, gelegentlich auch Gleichspannungstransformatoren genannt, bekannt. Für bestimmte Anwendungen, wie beispielsweise für Batterieladegeräte oder Batterietestgeräte, sind leistungsfähige Gleichspannungswandler notwendig, die auch bidirektional betrieben werden können. Eine mögliche Realisierung eines bidirektionalen Gleichspannungswandlers stellt ein Synchronwandlers dar, welche Tiefsetzsteller darstellen, d.h. welche Eingangsspannungen in Ausgangsspannungen kleiner oder maximal gleich der Eingangsspannungen wandeln, bzw. umgekehrt. Hierzu wird eine Halbbrücke verwendet, wobei die zwei Leistungsschalter der Halbbrücke von einer Steuerung mit Pulsweitenmodulation (PWM-Steuerung) derart angesteuert werden, dass sie innerhalb einer Schaltperiode, welche durch die vorgegebene Schaltfrequenz festgelegt ist, alternierend mit invertierten Schaltpulsen angesteuert, schalten. Somit ist im Grunde immer ein Leistungsschalter einer Halbbrücke leitend, der andere sperrt. Die Höhe der Ausgangsspannung des Synchronwandlers wird durch die Vorgabe des Tastgrades der PWM-Steuerung eingestellt. Der Tastgrad bezeichnet das Verhältnis der Pulsdauer der oberen Leistungsschalter einer Halbbrücke zur Schaltperiode. Diese Synchronwandler können auch als Mehrphasenwandler ausgeführt werden. In dieser Ausführungsform werden bekanntermaßen mehrere Halbbrücken mit jeweils zwei Leistungsschaltern über die Ausgangsdrosseln der Halbbrücken parallel geschaltet und von der PWM-Steuerung der Reihe nach angesteuert. So werden die Leistungsschalter in der Regel um einen Bruchteil der Schaltperiode versetzt getaktet angesteuert, in erster Linie um Ausgangsstromrippel zu reduzieren. Der Ausgangsstrom wird bei mehrphasigen Synchronwandlern mit einer festen Abtastrate bestimmt. Um zu gewährleisten, dass die Abtastpunkte jeweils auf die Strommittelwerte fallen, finden die Taktung der Leistungsschalter jeweils um die Schaltperiodendauer dividiert durch die Anzahl der Halbbrücken versetzt statt. Mit der mehrphasigen Ansteuerung lassen sich größere Ausgangsströme bei kleinerer Stromwelligkeit erzeugen, bzw. kann die Schaltfrequenz des Summenausgangsstroms eines solchen Mehrphasenwandlers reduziert werden, was eine einfachere Filterdimensionierung ermöglicht. Nicht zuletzt können in einem Mehrphasenwandler für den gleichen Leistungsbereich kleinere Kondensatoren verwendet werden.

Bekanntermaßen dürfen der obere und der untere Leistungsschalter einer Halbbrücke jedoch nicht gleichzeitig leitend geschaltet werden, da sonst der Spannungseingang des Synchronwandlers kurzgeschlossen wird. Aus diesem Grund ist es nicht möglich die beiden Leistungsschalter einer Halbbrücke gleichzeitig bzw. unmittelbar hintereinander zu schalten, da sonst riskiert werden würde, dass beispielsweise aufgrund von Schaltverzögerungen im Nano-/Mikrosekundenbereich dennoch für eine kurze Zeit beide Schalter leitend geschaltet werden und somit der Eingang kurzgeschlossen wird. Abhilfe schafft das Einfügen von Totzeiten zwischen dem Schalten der oberen und unteren Leistungsschalter einer Halbbrücke. Damit kann sichergestellt werden, dass der eine Schalter ausgeschaltet ist, bevor der andere Schalter eingeschaltet wird. Durch das Einfügen von Totzeiten tritt jedoch immer eine Reduktion des erreichbaren Tastgrades auf, da der erreichbare minimale und maximale Tastgrad und damit die minimale und maximale Ausgangsspannung eingeschränkt werden. Damit wird also der abgedeckte Spannungsbereich des Synchronwandlers bei Ansteuerung mit invertierenden PWM-Signalen reduziert und es ist nicht möglich, besonders kleine oder besonders große Spannungen auszugeben. Das Ansteuern der Halbbrücke mit invertierenden PWM Signalen hat grundsätzlich den Sinn, dass der Strom innerhalb einer Pulsperiode kontinuierlich zwischen positiven und negativen Werten wechseln kann. Da im Normalbetrieb beide Leistungsschalter immer alternierend schalten, kann eine hohe oder niedrige Ausgangsspannung nicht genau eingestellt bzw. erreicht werden, da die Spannung durch die erforderlichen Pulse des anderen Leistungsschalter und die dadurch erzeugten Totzeiten beeinflusst wird. Somit kann auch keine theoretisch maximal oder minimal mögliche Spannung auf Ausgangsseite ausgegeben werden, ohne einen gewissen Fehler zu erhalten. Es sind zwar PWM-Steuerungen bekannt, die es zumindest ermöglichen einen Tastgrad von 100 Prozent zu erzeugen, jedoch gibt es eine Lücke bei Werten knapp unter 100 Prozent.

Grundsätzlich gibt es einen Betriebsbereich jedes Synchronwandlers, in dem die Ein- und Ausschaltpulse des Synchronwandlers so kurz sind, dass der Synchronwandler in diesem U/I Betriebsbereich nicht zuverlässig schalten kann. Der Stand der Technik zeigt, wie dieser Betriebsbereich vermieden wird. Die EP 2 439 837 A1 offenbart einen Sperrmodus, welcher bei einem sog. "one arm driving", also einer Deaktivierung von zumindest einem Leistungsschalter aktiviert wird. Die Auswahl dieser Deaktivierung basiert lediglich auf einem Tastgrad,

Die DE 10 2013 107 792 A1 zeigt, dass bei einem Tastgrad in einem eigentlich nicht erwünschten Betriebsbereich, der Sollwert der Eingangsspannung so manipuliert wird, dass dieser Betriebsbereich des Synchronwandlers vermieden wird. Die US 2013/0229829 A1 zeigt dass der Strom, welcher durch die Drossel fließt keinen Gleichanteil aufweisen kann. Der gezeigte Burstmode schaltet darüber hinaus mit einer festen Pulsbreite, was zu Folge hat, dass in diesem Betriebsbereich nur einen festen Betriebspunkt angefahren werden kann.

Es ist somit Ziel der vorliegenden Erfindung den erzielbaren Spannungsbereich eines Gleichspannungswandlers zu erweitern.

Dieses Ziel wird erreicht, indem eine zweite positive Ausgangsstromschwelle und eine zweite negative Ausgangsstromschwellevorhanden ist, der Ausgangsstrom mit einer Abtastperiode abgetastet wird und falls der Ausgangsstrom kleiner als die zweite positive Ausgangsstromschwelle und größer als die zweite negative Ausgangsstromschwelle ist, der Synchronwandler in einen Niedrigstrommodus als Betriebsmodus geschaltet wird, indem die Leistungsschalter mit einer Schaltperiode, die der um einen Faktor z erhöhten Abtastperiode entspricht, geschalten werden. Damit reduziert sich der Einfluss der Totzeiten um den selben Faktor z, da z mal seltener umgeschaltet wird. Die Überschreitung der oberen oder unteren ersten Tastgradschwelle wird vorausgesetzt, da sonst der Normalmodus ausreichen würde.

Falls der Ausgangsstrom größer als eine erste positive Ausgangsstromschwelle oder kleiner als eine erste negative Ausgangsstromschwelle ist, kann der Synchronwandler zusätzlich in einen Sperrmodus geschaltet werden, indem alle unteren Leistungsschalter oder alle oberen Leistungsschalter, also die jeweiligen Leistungsschalter, die im Normalmodus noch kurze Pulse pro Periode beisteuern und damit zusätzlich eine Totzeit bewirken würde, permanent deaktiviert werden. "Deaktivieren" bedeutet, dass der jeweilige Leistungsschalter permanent offen ist und keine Ansteuerpulse an ihm anliegen. Dadurch bestimmt alleine die Pulsweite des gegensätzlichen Leistungsschalters der Halbbrücke die Ausgangsspannung und es muss keine Totzeit zwischen dem Schalten der Leistungsschalter einer Halbbrücke berücksichtigt werden. Da sich die Normalschaltperiode im Sperrmodus nicht ändert kann die Abtastperiode des Ausgangsstroms beibehalten werden.

Im Extremfall können somit beispielsweise bei positivem Ausgangsstrom die oberen Leistungsschalter (bei mehrphasigen Synchronwandlern versetzt angesteuert) permanent schalten, wogegen alle unteren Leistungsschalter während des Sperrmodus permanent deaktiviert sind und ein Tastgrad von hundert Prozent erreicht wird. Im extremen Gegensetz können dazu können alle oberen Leistungsschalter permanent deaktiviert werden, wogegen alle unteren Leistungsschalter permanent (bei mehrphasigen Synchronwandlern wiederum versetzt) schalten was einen Tastgrad von null Prozent ergibt. Bei negativem Ausgangsstrom sind die Rollen der oberen und unteren Leistungsschalter vertauscht.

Würden bei niedrigen Ausgangsströmen alle oberen oder alle unteren Leistungsschalter gesperrt sein, dann ist ein Nulldurchgang des Ausgangsstromes nicht möglich. Fließt beispielsweise ein positiver Ausgangsstrom, so werden im Sperrmodus nur die oberen Leistungsschalter geschaltet. Wenn aber die unteren Leistungsschalter gesperrt sind, kann kein Stromwechsel von positiver auf die negative Richtung stattfinden, da die Energie in der Induktivität beim Ausgangsstromnulldurchgang Null ist und die Stromrichtungsumkehr auf negative Ausgangsströme erst passieren, wenn der untere Leistungsschalter durchschaltet und die Ausgangsspannung den Strom durch den unteren Leistungsschalter in die negative Richtung treiben würde. Die Eingangsspannung ist bei einem Synchronwandler größer als die Ausgangsspannung. So passieren Ausgangsstromlücken bei um Null Ampere und es können beispielsweise Oszillationen zwischen dem Sperrmodus für positiven Strom (Deaktivieren aller unteren Leistungsschalter) und dem Sperrmodus für negativen Strom (Deaktivieren aller oberen Leistungsschalter) auftreten. Bei nicht niedrigen oder nicht hohen Tastgraden muss somit der Normalmodus anstatt des Sperrmodus verwendet werden um einen Nulldurchgang des Ausgangsstroms zu erzeugen. Bei niedrigen oder hohen Tastgraden ergibt der Normalmodus abermals die oben erwähnte Totzeitproblematik und die gewünschten Tastgrade und damit Ausgangsspannungen können nicht erreicht werden.

Zusätzlich können die Pulsdauern zumindest der oberen oder der unteren Leistungsschalter einer Halbbrücke von der Pulsdauer um den Faktor m erhöht werden. Die um den Faktor m angehobene Pulsdauer ermöglich es, die erforderliche Totzeit bei invertierenden Schalten der Halbbrücke zu berücksichtigen. Es wird erreicht, dass die Pulsbreiten für die sehr kleine Ausgangsspannungen größer als die Totzeit wird, und somit ausgegeben werden können. Insgesamt ergibt sich nämlich eine höhere aufsummierte Gesamtpulsdauer über die einzelnen Impulse, die z mal seltener auftreten, jedoch m mal breiter sind.

Vorteilhafterweise wird im Niedrigstrommodus beispielsweise durch Erhöhung der Schaltperiode vorgesehen, dass innerhalb einer Abtastperiode nur eine Halbbücke schaltet, der mehrphasige Synchronwandler also wie ein einphasiger Synchronwandler betrieben wird, wobei mit jeder Abtastperiode die schaltende Halbbrücke wechselt. Die Stromwelligkeit ist bei niedrigen Ausgangsströmen ohnehin gering, sodass der Verzicht auf ein verschachteltes Schalten der Halbbrücken mit vergrößerter Schaltperiode keine Nachteile für die Filterung des Ausgangsstromrippels mit sich bringt. Pro Abtastperiode kann somit jeweils abwechselnd eine Halbbrücke geschaltet werden.

Vorteilhafterweise entspricht der Faktor z dem Faktor m, womit einerseits derselbe Tastgrad wie in Normalmodus erreichbar ist, jedoch mit z=m weniger auftretenden Totzeiten. Außerdem wird gewährleistet, dass die Abtastperiode des Ausgangsstrom immer den Mittelwert des gerade aktiven Leistungsschalter trifft und den gewünschten Tastgrad zu justieren.

Um Oszillationen zwischen Niedrigstrommodus und den Sperrmodus zu vermeiden ist es möglich Hysteresen zwischen erster positiver und zweiter positiver Ausgangsstromschwelle bzw. zwischen erster negativer und zweiter negativer Ausgangsstromschwelle zu erzeugen.

Wenn sich der Synchronwandler im Sperrmodus befindet, so kann er im Sperrmodus verbleiben, falls der Ausgangsstrom größer als eine zweite positive Ausgangsstromschwelle oder kleiner als eine zweite negative Ausgangsstromschwelle bleibt, je nach Polarität des Ausgangsstromes.

Wenn sich der Synchronwandler im Niedrigstrommodus befindet, so kann der Synchronwandler im Niedrigstrommodus verbleiben falls der Ausgangsstrom kleiner als die erste positive Ausgangsstromschwelle und größer als die erste negative Ausgangsstromschwelle bleibt verbleibt.

Falls keine Hysterese erwünscht ist, so können erste und zweite negative Ausgangsstromschwelle, bzw. erste und zweite positive Ausgangsstromschwelle jeweils gleichgesetzt werden.

Sobald der Tastgrad bei aktivem Sperrmodus oder Niedrigstrommodus die obere Tastgradschwelle, bzw. die untere Tastgradschwelle kreuzt, so wird der Synchronwandler in den Normalmodus geschaltet. Der Normalmodus ist also aktiv, wenn die obere Tastgradschwelle nicht überschritten, bzw. die untere Tastgradschwelle nicht unterschritten wurde. Es kann somit auch hinsichtlich des Tastgrades zu Oszillationen zwischen Normalmodus und Sperrmodus, bzw. Niedrigstrommodus kommen, wenn der Tastgrad um die obere bzw. untere Tastgradschwelle pendelt. Um diese Oszillationen zwischen Normalmodus und Sperrmodus, bzw. dem Niedrigstrommodus zu vermeiden kann eine weitere Hysterese erzeugt werden, indem zumindest eine weitere Tastgradschwelle festgelegt wird, die näher bei einem Tastgrad von 50% ist, als die obere bzw. die untere Tastgradschwelle. Erst ein Kreuzen der weiteren Tastgradschwelle durch den Tastgrad bewirkt bei aktivem Sperrmodus oder Niedrigstrommodus, ein Schalten in den Normalmodus. Befindet sich die weitere Tastgradschwelle zwischen einem Tastgrad von 50% und der oberen Tastgradschwelle und ist ein Sperrmodus oder Niedrigstrommodus aktiv, so folgt bei Unterschreitung der oberen Tastgradschwelle noch kein Umschalten in den Normalmodus, sondern erst bei einer darauffolgenden Unterschreitung der weiteren Tastgradschwelle. Befindet sich die weitere Tastgradschwelle zwischen einem Tastgrad von 50% und der unteren Tastgradschwelle und ist ein Sperrmodus oder Niedrigstrommodus aktiv, so folgt bei Überschreitung der unteren Tastgradschwelle noch kein Umschalten in den Normalmodus, sondern erst bei einer darauffolgenden Überschreitung der weiteren Tastgradschwelle. Dies ergibt effektiv eine Hysterese zwischen der zumindest einen weiteren Tastgradschwelle und der oberen Tastgradschwelle bzw. der unteren Tastgradschwelle. Zusammengefasst bewirkt ausgehend vom Normalmodus somit weiterhin ein Überschreiten der oberen Tastgradschwelle, bzw. ein Unterschreiten der unteren Tastgradschwelle ein Schalten in einen Sperrmodus, bzw. den Niedrigstrommodus. Jedoch bewirkt nun ausgehend vom Sperrmodus bzw. Niedrigstrommodus erst ein Kreuzen der weiteren Tastgradschwelle durch den Tastgrad ein Schalten in den Normalmodus.

Ein Nichtimplementieren der weiteren Tastgradschwelle kann auch als Zusammenfallen von weiterer Tastgradschwelle und oberer, bzw. unterer Tastgradschwelle interpretiert werden - womit die weitere Tastgradschwelle jedoch nicht mehr näher bei einem Tastgrad von 50% ist, als die obere bzw. die untere Tastgradschwelle.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 den schaltungstechnischen Aufbau eines vierphasigen Synchronwandlers,
Fig.2 Schaltdiagramme eines mehrphasigen Synchronwandlers im Normalmodus M₀
Fig.3 Schaltdiagramme eines mehrphasigen Synchronwandlers im Niedrigstrommodus M₃
Fig.4 eine Darstellung der möglichen Betriebsmodi M₀, M₁, M₂, und M₃
Fig.5 Schaltdiagramme des Übergangs von Normalmodus und Betriebsmodi M₀, M₁, M₃, M₂ und eine zugehörige Ausgangsstromkennlinie mit Nulldurchgang.

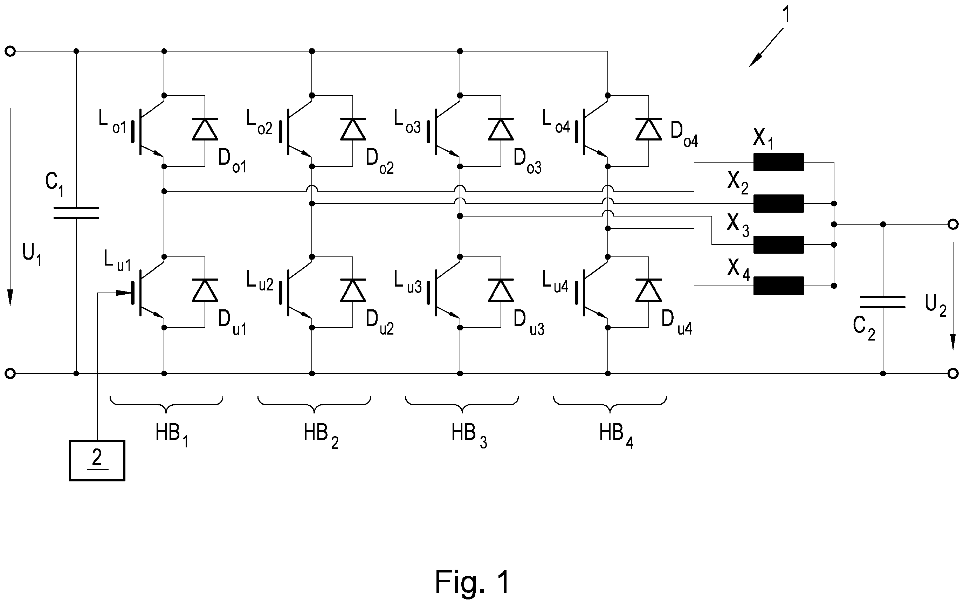

In Fig. 1 ist ein bekannter mehrphasiger, hier ein vierphasiger, Synchronwandler 1 nach dem Stand der Technik dargestellt. Bekanntermaßen sind Synchronwandler bidirektional, es seien jedoch in Folge die linke Seite beispielsweise als Eingangsseite mit der Eingangsspannung U₁ an der Eingangskapazität C₁ und die rechte Seite als Ausgangsseite mit der Ausgangsspannung U₂ an der Ausgangskapazität C₂ bezeichnet. Ebenso sind, wie bekannt, Induktivitäten X₁, X₂, X₃, X₄ (Drosseln) an den einzelnen Phasen vorgesehen, wobei die Induktivitäten X₁, X₂, X₃, X₄ einerseits zwischen dem oberen und unteren Leistungsschaltern mit jeweils einer Halbbrücke HB₁, HB₂, HB₃, HB₄ verbunden sind und andererseits miteinander verbunden sind. Die Induktivitäten X₁, X₂, X₃, X₄ bilden gemeinsam mit der Ausgangskapazität C₂ einen Ausgangsfilter des Synchronwandlers 1.

Die Halbbrücken HB₁, HB₂, HB₃, HB₄ bestehen aus jeweils einem oberen Leistungsschalter Lₒ₁, Lₒ₂, Lₒ₃, Lₒ₄ und jeweils einem unteren Leistungsschalter Lᵤ₁, Lᵤ₂, Lᵤ₃, Lᵤ₄ und gegebenenfalls zugehörigen Dioden Dₒ₁, Dᵤ₁, Dₒ₂, Dᵤ₂, Dₒ₃, Dᵤ₃, Dₒ₄, Dᵤ₄. Eine PWM-Steuerung 2 (in Fig.1 nur für den Leistungsschalter Lᵤ₁ angedeutet) steuert die Halbbrücken HB₁, HB₂, HB₃, HB₄, bzw. die Leistungsschalter Lₒ₁, Lₒ₂, Lₒ₃, Lₒ₄, Lᵤ₁, Lᵤ₂, Lᵤ₃, Lᵤ₄ der Halbbrücken HB₁, HB₂, HB₃, HB₄, im Normalmodus M₀ derart an, dass innerhalb einer durch eine vorgegebene Normalschaltfrequenz definierte Normalschaltperiode T₀ die Halbbrücken HB₁, HB₂, HB₃, HB₄ mit der Normschaltperiode T₀, jedoch um die Normschaltperiode T₀ / durch die Anzahl der Halbbrücken x versetzt, getaktet werden. Somit werden die oberen Leistungsschalter Lₒ₁, Lₒ₂, Lₒ₃, Lₒ₄ versetzt leitend geschaltet und währenddessen die jeweils zugehörigen unteren Leistungsschalter Lᵤ₁, Lᵤ₂, Lᵤ₃, Lᵤ₄ der betreffenden Halbbrücke HB₁, HB₂, HB₃, HB₄ gesperrt. Nach einer Pulsdauer tₒ der oberen Leistungsschalter Lₒ₁, Lₒ₂, Lₒ₃, Lₒ₄ werden jeweils die zuvor leitend geschalteten oberen Leistungsschalter Lₒ₁, Lₒ₂, Lₒ₃, Lₒ₄ gesperrt und die zuvor gesperrt geschalteten unteren Leistungsschalter Lᵤ₁, Lᵤ₂, Lᵤ₃, Lᵤ₄ werden leitend geschaltet. Nach einer Pulsdauer tᵤ der unteren Leistungsschalter Lᵤ₁, Lᵤ₂, Lᵤ₃, Lᵤ₄ werden diese wieder gesperrt und die oberen Leistungsschalter Lₒ₁, Lₒ₂, Lₒ₃, Lₒ₄ geschaltet. Die Rollen der oberen und unteren Leistungsschalter Lₒ₁, Lᵤ₁, Lₒ₂, Lᵤ₂, Lₒ₃, Lᵤ₃, Lₒ₄, Lᵤ₄ der Halbbrücken HB₁, HB₂, HB₃, HB₄ können natürlich auch vertauscht werden, beispielsweise bei geänderter Ausgangstromrichtung.

Um zu verhindern, dass die oberen Leistungsschalter Lₒ₁, Lₒ₂, Lₒ₃, Lₒ₄ und unteren Leistungsschalter Lᵤ₁, Lᵤ₂, Lᵤ₃, Lᵤ₄ der Halbbrücken HB₁, HB₂, HB₃, HB₄ gleichzeitig leitend geschaltet und dadurch der Spannungseingang kurzgeschlossen wird, wird nach jeder Normalplusdauer tₒ, tᵤ eine Totzeit τₜ zwischen dem Ein/Abschalten des oberen Leistungsschalter Lₒ₁, Lₒ₂, Lₒ₃, Lₒ₄ und dem Ab/Einschalten des zugehörigen unteren Leistungsschalter Lᵤ₁, Lᵤ₂, Lᵤ₃, Lᵤ₄ der Halbbrücke HB₁, HB₂, HB₃, HB₄ realisiert und umgekehrt. Dabei ergibt sich der nachvollziehbare Zusammenhang: Die Summe der Pulsdauern tₒ der oberen Leistungsschalter Lₒ₁, Lₒ₂, Lₒ₃, Lₒ₄ und der Pulsdauern tᵤ der unteren Leistungsschalter Lᵤ₁, Lᵤ₂, Lᵤ₃, Lᵤ₄ plus zweimal die Totzeit τₜ ergibt die Normalschaltperiode T₀. Der Tastgrad S beschreibt dabei das Verhältnis zwischen der Pulsdauer tₒ der oberen Leistungsschalter L₁₁, L₂₁, L₃₁, L₄₁ zur Normalschaltperiode Tₒ. Das Verhältnis der Pulsdauern tₒ, der oberen Leistungsschalter Lₒ₁, Lₒ₂, Lₒ₃, Lₒ₄ und der Pulsdauern tᵤ der unteren Leistungsschalter Lᵤ₁, Lᵤ₂, Lᵤ₃, Lᵤ₄ wird somit von der PWM-Steuerung 2 über den Tastgrad S und die Normaltastperiode T₀ bestimmt.

Ab beispielsweise Tastgraden von 25% ergeben sich bei n=4 vorhandenen Halbbrücken HB₁, HB₂, HB₃, HB₄ Überlappungen der Pulsdauern tₒ, tᵤ der oberen Leistungsschalter Lₒ₁, Lₒ₂, Lₒ₃, Lₒ₄ bzw. der unteren Leistungsschalter Lᵤ₁, Lᵤ₂, Lᵤ₃, Lᵤ₄, je nach Stromrichtung.

Die Einstellung der Ausgangsspannung U₂ erfolgt bei Synchronwandlern über den Tastgrad S. Ein Tastgrad S von hundert Prozent würde (bei positivem Ausgangsstrom Iₐ) somit bedeuten, dass die oberen Leistungsschalter Lₒ₁, Lₒ₂, Lₒ₃, Lₒ₄ permanent geschaltet ist und die unteren Leistungsschalter Lᵤ₁, Lᵤ₂, Lᵤ₃, Lᵤ₄ aller Halbbrücken HB₁, HB₂, HB₃, HB₄ permanent gesperrt ist. Das würde ein Durchschalten der Eingangsspannung U₁ auf die Ausgangsspannung U₂ bewirken. Ein Tastgrad S von null Prozent würde im Gegenzug bedeuten, dass alle unteren Leistungsschalter Lᵤ₁, Lᵤ₂, Lᵤ₃, Lᵤ₄ permanent geschaltet sind und die oberen Leistungsschalter Lₒ₁, Lₒ₂, Lₒ₃, Lₒ₄ aller Halbbrücken HB₁, HB₂, HB₃, HB₄ permanent gesperrt bzw. permanent deaktiviert sind. Dies bewirkt, eine Ausgangsspannung U₂ von Null. Da innerhalb einer Normalschaltperiode T₀ aufgrund der versetzten Schaltung der oberen Leistungsschalter Lₒ₁, Lₒ₂, Lₒ₃, Lₒ₄ und der notwendigen Pulse der zugehörigen unteren Leistungsschalter Lᵤ₁, Lᵤ₂, Lᵤ₃, Lᵤ₄ und der damit zweimal benötigten Totzeit τₜ nun der Tastgrad S nicht beliebig verkleinert oder vergrößert werden kann, sind diese extremen Tastgrade S normalerweise nicht erreichbar. Im Normalmodus M₀ ist der mögliche Bereich der Ausgangsspannung U₂ daher eingeschränkt.

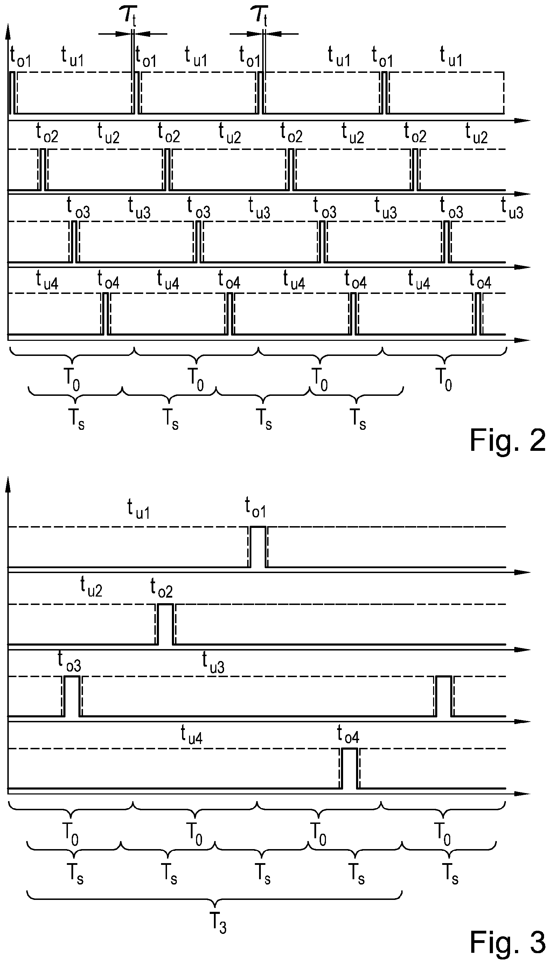

In Fig. 2 ist das Schaltdiagramm der Leistungsschalter Lₒ₁, Lᵤ₁, Lₒ₂, Lᵤ₂, Lₒ₃, Lᵤ₃, Lₒ₄, Lᵤ₄ dargestellt, wobei dabei jede der vier Halbbrücken HB₁, HB₂, HB₃, HB₄ versetzt mit der Normalschaltperiode T₀ durch die Anzahl x der Halbbrücken getaktet werden, also hier mit T₀/4. Die Abtastperiode Tₛ des Ausgangsstroms Iₐ ist dabei so eingestellt, dass sich zum Zeitpunkt der Abtastung ein Stromzweig den aktuellen Strommittelwert führt, was nach mit der Relation Tₛ = T₀*i/(2*x) gewährleistet ist. Dabei stellt x die Anzahl der Halbbrücken HB₁ HB₂, HB₃, HB₄ dar und i eine natürliche Zahl von 1 bis 2x. Den abgetasteten Ausgangsstromwert benötigt die PWM-Steuerung 2 für die Ansteuerung des Synchronwandlers 1. Es ist ein relativ geringer Tastgrad S dargestellt, d.h. die Pulsdauern tₒ der oberen Leistungsschalter Lₒ₁, Lₒ₂, Lₒ₃, Lₒ₄ sind deutlich niedriger, als die Pulsdauern tᵤ der unteren Leistungsschalter Lᵤ₁, Lᵤ₂, Lᵤ₃, Lᵤ₄. Die Totzeit τₜ ist jeweils zwischen den einzelnen Pulsen ersichtlich. Die minimale Pulsdauer tₒ der oberen Leistungsschalter Lₒ₁, Lₒ₂, Lₒ₃, Lₒ₄ in einer Normalschaltperiode T₀ ist somit durch die minimal erforderliche Pulsdauer tₒ der oberen Leistungsschalter Lₒ₁, Lₒ₂, Lₒ₃, Lₒ₄ und in zweifacher Weise durch die Länge der Totzeit τₜ begrenzt. Die minimale Pulsdauern tₒ, tᵤ aller Leistungsschalter Lₒ₁, Lᵤ₁, Lₒ₂, Lᵤ₂, Lₒ₃, Lᵤ₃, Lₒ₄, Lᵤ₄ liegen näherungsweise in der Größenordnung der Totzeit τₜ. Damit ist der lineare Bereich des Tastgrads S und damit die minimale Ausgangsspannung in annähernd dreifacher Weise durch die Totzeit τₜ begrenzt. Bei einem hohen Tastgrad S oder bei einem negativen Ausgangsstrom Iₐ ergibt sich dasselbe Problem bei vertauschten Rollen der oberen Leistungsschalter Lₒ₁, Lₒ₂, Lₒ₃, Lₒ₄ und der unteren Leistungsschalter Lᵤ₁, Lᵤ₂, Lᵤ₃, Lᵤ₄.

Um den Bereich der Ausgangsspannung U₂, also den Tastgrad auf die sonst nicht erreichbaren Werte knapp unter 100% bzw. knapp über 0% auszuweiten, wird erfindungsgemäß, sobald der Tastgrad S eine obere Tastgradschwelle Sₒ₁ überschreitet oder eine untere Tastgradschwelle Sᵤ₁ unterschreitet, vom Normalmodus M₀ in einen Betriebsmodus M₁, M₂, M₃ geschaltet, in dem zumindest einer der Leistungsschalter Lₒ₁, Lᵤ₁, Lₒ₂, Lᵤ₂, Lₒ₃, Lᵤ₃, Lₒ₄, Lᵤ₄ zumindest einer Halbbrücke HB₁, HB₂, HB₃, HB₄ über einen Zeitraum, der größer als die Normalschaltperiode T₀ ist, permanent deaktiviert wird. "Deaktiviert" bedeutet, dass der Leistungsschalter keine Pulse liefert, also offen ist, und damit die Schaltdauer des gegenüberliegenden Leistungsschalters durch keine Totzeit reduziert wird. Damit wird gegenüber dem Normalmodus M₀ innerhalb eines der Normalschaltperiode T₀ entsprechenden Zeitraums die Totzeit τₜ, welche den Spannungsbereich begrenzen würde, annähernd mindestens dreimal eingespart.

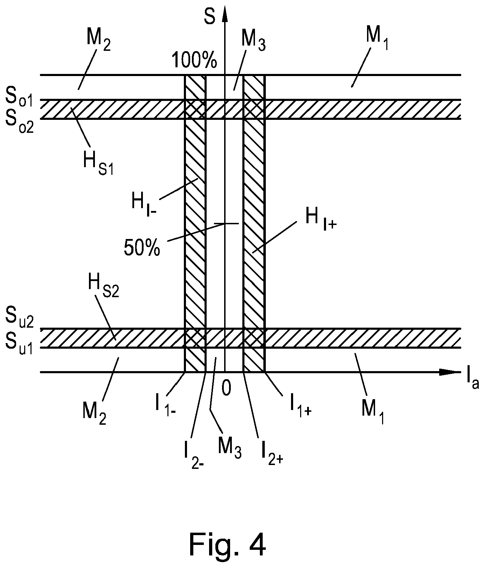

Um die Funktionsweise der beispielhaften Betriebsmodi M₁, M₂, M₃ zu beschreiben sollen in Folge als Betriebsmodi Sperrmodi M₁, M₂, und ein Niedrigstrommodus M₃ unterschieden (Fig.4) werden.

Falls der Ausgangsstrom Iₐ größer als eine erste positive Ausgangsstromschwelle I₁₊ oder kleiner als eine erste negative Ausgangsstromschwelle I₁₋ ist (Fig.4), kann der Synchronwandler 1 in einen Sperrmodus M₁, M₂ geschaltet werden, indem alle unteren Leistungsschalter Lᵤ₁, Lᵤ₂, Lᵤ₃, Lᵤ₄(bei Iₐ>I₁₊) oder alle oberen Leistungsschalter Lₒ₁, Lₒ₂, Lₒ₃, Lₒ₄ (bei Iₐ < I₁₋) permanent deaktiviert werden solange sich der mehrphasige Synchronwandler 1 im Sperrmodus M₁, M₂ befindet. Dazu muss, wie oben erwähnt die vom Synchronwandler 1 gewünschte Ausgangsspannung U₂ ein Tastverhältnis größer der ersten oberen Tastgradschwelle Sₒ₁ oder kleiner der ersten unteren Tastgradschwelle Sᵤ₁ erfordern Falls also die obere oder untere Tastgradschwelle Sₒ₁, Sᵤ₁ über, bzw. unterschritten wurde und der Ausgangsstrom Iₐ beispielsweise die erste positive Ausgangsstromschwelle I₁₊ überschreitet, so werden alle unteren Leistungsschalter Lᵤ₁, Lᵤ₂, Lᵤ₃, Lᵤ₄ aller Halbbrücken HB₁, HB₂, HB₃, HB₄ permanent deaktiviert, was zum Sperrmodus M₁ führt. Die oberen Leistungsschalter Lₒ₁, Lₒ₂, Lₒ₃, Lₒ₄ schalten weiterhin versetzt um die Normalschaltperiode T₀ durch die Anzahl der Halbbrücken HB₁, HB₂, HB₃, HB₄ mit einer Pulsdauer tₒ je nach gewünschtem Tastgrad S. Es gibt jedoch den Vorteil, dass nun höhere und niedrigere Pulsdauern tₒ und damit höhere und niedrigere Tastgrade S als im Normalmodus M₀ ermöglicht werden. Da die unteren Leistungsschalter Lᵤ₁, Lᵤ₂, Lᵤ₃, Lᵤ₄ im Sperrmodus M₁ nicht schalten, sind keine Totzeiten τₜ erforderlich und die Pulsdauern tₒ sind nicht eingeschränkt.

Falls die obere Tastgradschwelle Sₒ₁ überschritten wurde, ist eine hohe Ausgangsspannung U₂ erwünscht. Diese Ausgangsspannung U₂ kann bei positivem Ausgangsstrom Iₐ durch Variation der Pulsdauern tₒ der oberen Leistungsschaltern Lₒ₁, Lₒ₂, Lₒ₃, Lₒ₄ beliebig eingestellt werden. Es ist somit auch ein Tastgrad S in einem Bereich knapp unter und bis zu hundert Prozent möglich, was bedeuten würde, dass die oberen Leistungsschaltern Lₒ₁, Lₒ₂, Lₒ₃, Lₒ₄ fast permanent (im Falle eines mehrphasigen Synchronwandlers 1 abermals versetzt) oder permanent geschaltet sind. In jedem Fall ist die Limitierung durch die zweifache Totzeit τₜ und der mindesten Pulsdauer tᵤ (die in der Regel annähernd einer Totzeit τₜ entspricht) der unteren Leistungsschalter Lᵤ₁, Lᵤ₂, Lᵤ₃, Lᵤ₄ nicht mehr gegeben. Damit kann eine höhere Ausgangsspannung U₂, erzielt werden. Für kleine Tastgrade S gilt ein analoger Sachverhalt.

Falls die untere Tastgradschwelle Sᵤ₁ unterschritten wurde, werden ebenso alle unteren Leistungsschalter Lᵤ₁, Lᵤ₂, Lᵤ₃, Lᵤ₄ aller Halbbrücke HB₁, HB₂, HB₃, HB₄ permanent deaktiviert. Damit entfallen gleichermaßen Totzeiten τₜ und die Pulsdauern tₒ der der oberen Leistungsschaltern Lₒ₁, Lₒ₂, Lₒ₃, Lₒ₄ können beliebig klein (bis zu einer Pulsdauer tₒ in der Größenordnung der Totzeit τₜ und selbst bis zu einer Pulsdauer tₒ von Null) gewählt werden. Damit sind kleine Tastgrade S möglich, ohne dass beide Totzeiten τₜ oder störende Pulse der unteren Leistungsschaltern Lᵤ₁, Lᵤ₂, Lᵤ₃, Lᵤ₄ beitragen.

Falls jedoch der Ausgangsstrom Iₐ die erste negative Ausgangsstromschwelle I₁₋ unterschreitet, so werden alle oberen Leistungsschalter Lₒ₁, Lₒ₂, Lₒ₃, Lₒ₄ aller Halbbrücken HB₁, HB₂, HB₃, HB₄ permanent deaktiviert, was zum Sperrmodus M₂ führt. In diesem Sperrmodus M₂ schalten die unteren Leistungsschalter Lᵤ₁, Lᵤ₂, Lᵤ₃, Lᵤ₄ weiterhin versetzt und mit Pulsdauern tᵤ je nach gewünschtem Tastgrad S. Somit können auch bei negativem Ausgangsstrom Iₐ hohe und niedrige Tastgrade S ermöglicht werden, da nun die unteren oberen Leistungsschalter Lₒ₁, Lₒ₂, Lₒ₃, Lₒ₄ nicht schalten, und keine Totzeiten τₜ einfließen. Im Vergleich zum zuvor genannten Sperrmodus M₁, also bei positivem Ausgangsstrom Iₐ, werden also im Sperrmodus M₂ bei negativem Ausgangsstrom Iₐ die Rollen der oberen Leistungsschalter Lₒ₁, Lₒ₂, Lₒ₃, Lₒ₄ und unteren Leistungsschalter Lᵤ₁, Lᵤ₂, Lᵤ₃, Lᵤ₄ vertauscht.

Für kleine Ausgangsströme Iₐ, d.h. falls der Ausgangsstrom Iₐ kleiner als die zweite positive Ausgangsstromschwelle I₂₊ und größer als die zweite negative Ausgangsstromschwelle I₂₋ist, also wenn der Ausgangsstrom Iₐ in einem Bereich um den Stromnulldurchgang liegt, kann der Synchronwandler 1 in einen Niedrigstrommodus M₃ als Betriebsmodus geschaltet werden. Hierbei werden die Leistungsschalter L₁₁, L₁₂, L₂₁, L₂₂, L₃₁, L₃₂, L₄₁, L₄₂ mit einer Schaltperiode T₃ die der um einen Faktor z erhöhten Normalschaltperiode T₀ entspricht, geschalten. Dies bedeutet, dass die Halbbrücken HB₁, HB₂, HB₃, HB₄ nicht wie im Normalmodus M₀ mit der Normalschaltperiode T₀ getaktet werden. Anders gesagt durchlaufen innerhalb eines der Normalschaltperiode T₀ entsprechenden Zeitraums nicht alle Halbbrücken HB₁, HB₂, HB₃, HB₄ eine Umschaltphase, d.h. es wechseln nicht alle oberen Leistungsschalter Lₒ₁, Lₒ₂, Lₒ₃, Lₒ₄ und unteren Leistungsschalter Lᵤ₁, Lᵤ₂, Lᵤ₃, Lᵤ₄ den Zustand, indem sie von leitend auf gesperrt und umgekehrt geschaltet werden. Daraus folgt bei einem Faktor z von zumindest Zwei, dass innerhalb eines der Normalschaltperiode T₀ entsprechenden Zeitraums zumindest einer der Leistungsschalter L₁₁, L₁₂, L₂₁, L₂₂, L₃₁, L₃₂, L₄₁, L₄₂ deaktiviert ist, obwohl er im Normalmodus M₀ schalten würde.

Vorteilhafterweise kann der Faktor z derart gewählt werden, dass er der Relation z = x/i genügt, wobei i einen Wert von 1 bis x-1 darstellt, und x die Anzahl der Halbbrücken darstellt.

Weiters kann nur eine Halbbrücke HB₁, HB₂, HB₃, HB₄ pro Tastperiode T_{S} geschaltet werden, was beispielsweise durch geeignete Wahl des Faktors z und damit der Schaltperiode T₃ erreicht werden kann.

Um den Sachverhalt zu skizzieren, sei auf Fig.3 verwiesen. Die Schaltperiode T₃ entspricht in diesem Beispiel der z=4-fachen Abtastperiode Tₛ (mit x=4, i=1). Dies bewirkt damit beispielsweise bei einer Abtastperiode Tₛ von ¾T₀, eine Schaltperiode T₃ von 3T₀ und bedeutet, dass nur ein Drittel der Totzeiten τₜ innerhalb des gleichen Zeitraums auftreten. Es sind im Niedrigstrommodus M₃ nur acht Totzeiten τₜ innerhalb der Schaltperiode T₃ = 3*T₀ abzuzählen. Zum Vergleich sind It. Fig.2 innerhalb desselben Zeitraums 3-mal so viele, also 24 Totzeiten τₜ im Normalmodus M₀ zu berücksichtigen. Innerhalb einer Normalschaltperiode T₀ ist im Niedrigstrommodus M₃ immer mindestens einer der Leistungsschalter Lₒ₁, Lᵤ₁, Lₒ₂, Lᵤ₂, Lₒ₃, Lᵤ₃, Lₒ₄, Lᵤ₄ deaktiviert, welcher im Normalmodus M₀ aktiv wäre. In der ersten Normalschaltperiode T₀ betrifft dies hier die Leistungsschalter Lₒ₁, Lₒ₂, Lₒ₃, in der zweiten Normalschaltperiode T₀ die Leistungsschalter Lₒ₁, Lₒ₃, Lₒ₄, usw.

Vorteilhafterweise können im Niedrigstrommodus M₃ gleichzeitig die Pulsdauern tₒ, tᵤ der Leistungsschalter Lₒ₁, Lᵤ₁, Lₒ₂, Lᵤ₂, Lₒ₃, Lᵤ₃, Lₒ₄, Lᵤ₄ um einen Faktor m erhöht werden. Die um den Faktor m angehobenen Pulsdauern tₒ, tᵤ ermöglichen es beispielsweise bei sehr kleinen Tastgraden S auch kleinere Ausgangsspannungen U₂ auszugeben, da sich die Relation von Pulsdauern tₒ, tᵤ zur Totzeit τₜ um den Faktor m verbessert. Insgesamt ergibt sich eine höhere aufsummierte Gesamtpulsdauer über die einzelnen Pulsdauern tₒ, tᵤ, die z mal seltener auftreten, jedoch m mal breiter sind.

Es kann der Faktor m dem Faktor z gleich gewählt werden, womit sich derselbe Tastgrad S (also dieselbe Summe aller Pulsdauern innerhalb einer Normalschaltperiode T₀) wie im Normalmodus M₀ ergibt, womit gewährleistet ist, dass die Abtastungen des Ausgangsstroms Iₐ zu einem Zeitpunkt erfolgen, in dem sich eine Phase im Strommittelwert befindet. Gleichfalls ergibt sich dadurch auch, dass die Abtastung des Ausgangsstroms Iₐ im Niedrigstrommodus M₃ nicht geändert werden muss.

Um nun Oszillationen zwischen den Sperrmodi M₁, M₂ und dem Niedrigstrommodus M₃ zu vermeiden, kann jeweils eine Hysterese H_{I+} zwischen der ersten positiven Ausgangsstromschwelle I₁₊ und der zweiten positiven Ausgangsstromschwelle I₂₊ und eine Hysterese H_{I-} zwischen der ersten negativen Ausgangsstromschwelle I₁₋ und der zweiten negativen Ausgangsstromschwelle I₂₋ realisiert werden. Dabei muss vorgesehen werden, dass die erste positive Ausgangsstromschwelle I₁₊ größer als die zweite positive Ausgangsstromschwelle I₂₊, bzw. die erste negative Ausgangsstromschwelle I₁₋ kleiner als die zweite negative Ausgangsstromschwelle I₂₋ ist.

Falls bei aktivem Sperrmodus M₁, M₂ (d.h. die erste positive Ausgangsstromschwelle I₁₊ wird überschritten bzw. die die erste negative Ausgangsstromschwelle I₁₋ wurde unterschritten) der Ausgangsstrom Iₐ größer als eine zweite positive Ausgangsstromschwelle I₂₊ oder kleiner als eine zweite negative Ausgangsstromschwelle I₂₋ bleibt, kann der der Synchronwandler 1 also entsprechend der zugehörigen Hysterese H_{I-},H_{I+} im jeweiligen Sperrmodus M₁, M₂ verbleiben.

Kreuzt der Ausgangsstrom Iₐ bei aktivem Sperrmodus M₁, M₂ also die zweite positive Ausgangsstromschwelle I₂₊ oder die zweite negative Ausgangsstromschwelle I₂₋, nähert sich der Ausgangsstrom Iₐ also betragsmäßig gegen Null, so wird der Niedrigstrommodus M₃ aktiviert.

Bleibt bei aktivem Niedrigstrommodus M₃ (d.h. der Ausgangsstrom hat die zweite negative Ausgangsstromschwelle I₂₋ überschritten, bzw. die zweite positive Ausgangsstromschwelle I₂₊ unterschritten) der Ausgangsstrom Iₐ kleiner als die erste positive Ausgangsstromschwelle I₁₊ und größer als die erste negative Ausgangsstromschwelle I₁₋, so kann der der Synchronwandler also im Niedrigstrommodus M₃ verbleiben.

Kreuzt der Ausgangsstrom Iₐ also bei aktivem Niedrigstrommodus M₃ die erste positive Ausgangsstromschwelle I₁₊ oder die erste negative Ausgangsstromschwelle I₁₋, so wird der Niedrigstrommodus deaktiviert und je nach Stromrichtung der Sperrmodus M1 oder M3 aktiviert.

Entspricht die erste positive Ausgangsstromschwelle I₁₊ der zweiten positiven Ausgangsstromschwelle I₁₊ und/oder die erste negative Ausgangsstromschwelle I₁₋ der zweiten negativen Ausgangsstromschwelle I₂₋, so wird auf eine Hysterese H_{I+}, bzw. H_{I-} verzichtet.

Sobald bei aktivem Sperrmodus M₁, M₂ oder Niedrigstrommodus M₃ der Tastgrad S die obere Tastgradschwelle Sₒ₁, bzw. die untere Tastgradschwelle Sᵤ₁ kreuzt, so wird der Synchronwandler 1 in den Normalmodus M₀ geschaltet

Um Oszillationen auch zwischen dem Normalmodus M₀ und den Betriebsmodi M₁, M₂, M₃ zu verhindern, kann zumindest eine weitere Hysterese H_{S1}, H_{S2} realisiert werden. Hierzu wird zumindest eine weitere Tastgradschwelle Sₒ₂, Sᵤ₂ vorgesehen, die näher bei einem Tastgrad von S = 50% liegt als die obere Tastgradschwelle Sₒ₁ und die untere Tastgradschwelle Sᵤ₁. Nachdem im Sperrmodus (M₁, M₂) oder Niedrigstrommodus (M₃) der Tastgrad S die weitere Tastgradschwelle Sₒ₂, Sᵤ₂ kreuzt, so wird der Synchronwandler Fall in den Normalmodus M₀ geschaltet wird.

Die möglichen Betriebszustände und realisierbaren Hysteresen H_{I+}, Hᵢ₋, H_{S2}, H_{S1}, sowie mögliche Ausgangsstromschwellen I₁₋, I₂₋, I₁₊, I₂₊ und Tastgradschwellen Sₒ₁, Sₒ₂, Sᵤ₁, Sᵤ₂ sind in Fig 4 über Ausgangsstrom Iₐ und Tastgrad S aufgetragen.

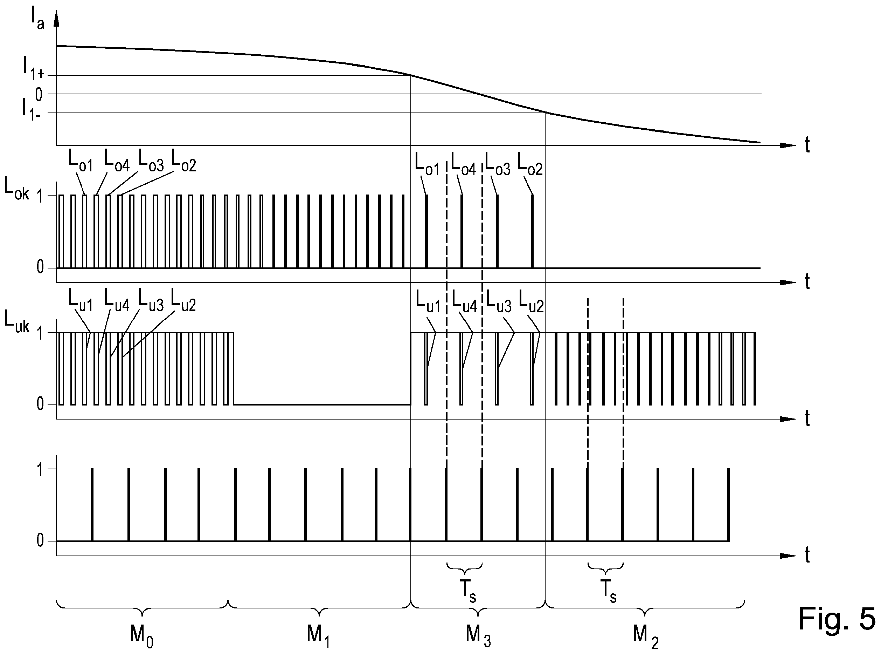

Fig.5 zeigt einen Verlauf des Ausgangsstroms Iₐ durch den Nulldurchgang und somit den Übergang vom Normalmodus M₀ zuerst in den Sperrmodus M₁, daraufhin in den Niedrigstrommodus M₃ und in weiterer Linie in den Sperrmodus M₂. Im Normalmodus M₀ werden alle der Leistungsschalter Lₒ₁, Lᵤ₁, Lₒ₂, Lᵤ₂, Lₒ₃, Lᵤ₃, Lₒ₄, Lᵤ₄ nach einer dem Stand der Technik entsprechenden PWM-Steuerung 2 geschaltet. Da in weiterer Folge der Tastgrad S sinkt und der Ausgangsstrom Iₐ positiv und ausreichend hoch ist, wird der Sperrmodus M₁ aktiviert, indem die unteren Leistungsschalter Lᵤ₁, Lᵤ₂, Lᵤ₃, Lᵤ₄ deaktiviert werden. Bei Annäherung des Ausgangsstroms Iₐ an den Nulldurchgang wird bei entsprechend niedrig bleibendem Tastgrad S der Niedrigstrommodus M₃ aktiviert. In diesem Modus schalten wieder alle Leistungsschalter Lₒ₁, Lᵤ₁, Lₒ₂, Lᵤ₂, Lₒ₃, Lᵤ₃, Lₒ₄, Lᵤ₄. Wie jedoch gut zu erkennen ist, wurde die Schaltperiodendauer T₃ auf ein z-faches (hier vierfaches) der Abtastperiode Tₛ erhöht. Ebenso wurden die Pulsdauern tₒ, tᵤ auf ein m-faches erhöht. Zu beachten ist, dass die Abtastpunkte (unterster Graph) des Synchronwandlers 1 unverändert bleiben, d.h. die Abtastrate T_{S} ändert sich auch im Niedrigstrommodus M₃ nicht. Die Summe der Pulsdauern t₀, tᵤ im Niedrigstrommodus M₃ entsprechen bei gleichbleibender Abtastrate T_{S} dennoch der Summe der Pulsdauern tₒ, tᵤ im Normalmodus M₀, woraufhin der Tastgrad S bestimmt werden kann. Nachdem der (negative) Ausgangsstrom Iₐ groß genug wird, wird vom Niedrigstrommodus M₀ auf den Sperrmodus M₂ geschaltet, da der Tastgrad S weiterhin klein genug bleibt. Dies bedeutet erfindungsgemäß, dass alle oberen Leistungsschalter Lₒ₁, Lₒ₂, Lₒ₃, Lₒ₄ permanent deaktiviert werden.

## Patentansprüche

1. Verfahren zum Ansteuern eines multiphasigen Synchronwandlers (1), bestehend aus mehreren Halbbrücken (HB₁, HB₂, HB₃, HB₄), wiederum bestehend aus jeweils einem oberen Leistungsschalter (Lₒ₁, Lₒ₂, Lₒ₃, Lₒ₄) und jeweils einem unteren Leistungsschalter (Lᵤ₁, Lᵤ₂, Lᵤ₃, Lᵤ₄.), durch eine Pulsweitenmodulation abhängig von einem vorgegebenen Tastgrad (S) im Bereich von null bis hundert Prozent, wobei vom Synchronwandler (1) ein Ausgangsstrom (Iₐ) erzeugt wird und der multiphasige Synchronwandler (1) in einem Normalmodus (M₀) betrieben wird, in dem die Leistungsschalter (Lₒ₁, Lᵤ₁, Lₒ₂, Lᵤ₂, Lₒ₃, Lᵤ₃, Lₒ₄, Lᵤ₄) mit einer durch eine vorgegebene Normalschaltfrequenz definierte Normalschaltperiode (T₀) und einer vom aktuellen Tastgrad (S) abhängigen Normalplusdauer (t₀, tᵤ) schalten, wobei sobald der Tastgrad (S) eine obere Tastgradschwelle (Sₒ₁) überschreitet oder eine untere Tastgradschwelle (Sᵤ₁) unterschreitet, der multiphasige Synchronwandler (1) vom Normalmodus (M₀) in einen Betriebsmodus (M₁, M₂, M₃) geschaltet wird, in dem zumindest einer der Leistungsschalter (Lₒ₁, Lᵤ₁, Lₒ₂, Lᵤ₂, Lₒ₃, Lᵤ₃, Lₒ₄, Lᵤ₄) zumindest einer Halbbrücke (HB₁, HB₂, HB₃, HB₄) über einen Zeitraum, der größer als die Normalschaltperiode (T₀) ist, permanent deaktiviert wird **dadurch gekennzeichnet, dass** eine zweite positive Ausgangsstromschwelle (I₂₊) und eine zweite negative Ausgangsstromschwelle (I₂₋) vorhanden ist, der Ausgangsstrom (Iₐ) mit einer Abtastperiode (Tₛ) abgetastet wird **und dass** falls der Ausgangsstrom (Iₐ) kleiner als die zweite positive Ausgangsstromschwelle (I₂₊) und größer als die zweite negative Ausgangsstromschwelle (I₂₋) ist, der Synchronwandler (1) in einen Niedrigstrommodus (M₃) als Betriebsmodus geschaltet wird, indem die Leistungsschalter (Lₒ₁, Lᵤ₁, Lₒ₂, Lᵤ₂, Lₒ₃, Lᵤ₃, Lₒ₄, Lᵤ₄) mit einer Schaltperiode (T₃), die der um einen Faktor z erhöhten Abtastperiode (Tₛ) entspricht, geschalten werden.

2. Verfahren nach Anspruch 1, **dadurch gekennzeichnet, dass** falls der Ausgangsstrom (Iₐ) größer als eine erste positive Ausgangsstromschwelle (I₁₊) oder kleiner als eine erste negative Ausgangsstromschwelle (I₁₋) ist, der mehrphasige Synchronwandler (1) in einen Sperrmodus (M₁, M₂) als Betriebsmodus geschaltet wird, indem alle unteren Leistungsschalter (L₁₂, L₂₂, L₃₂, L₄₂) oder alle oberen Leistungsschalter (Lₒ₁, Lₒ₂, Lₒ₃, Lₒ₄) permanent deaktiviert werden, solange sich der multiphasigen Synchronwandler (1) im Sperrmodus (M₁, M₂) befindet.

3. Verfahren nach Anspruch 1 oder 2, **dadurch gekennzeichnet, dass** zumindest die oberen oder die unteren Leistungsschalter (Lₒ₁, Lᵤ₁, Lₒ₂, Lᵤ₂, Lₒ₃, Lᵤ₃, Lₒ₄, Lᵤ₄) mit einer Pulsdauer (tₒ, tᵤ), die der um einen Faktor m erhöhten Pulsdauer (t₀) entspricht, geschalten werden.

4. Verfahren nach einem der Ansprüche 1 bis 3, **dadurch gekennzeichnet, dass** innerhalb der Abtastperiode (Tₛ) des Ausgangsstroms Iₐ nur die Leistungsschalter (Lₒ₁, Lᵤ₁, Lₒ₂, Lᵤ₂, Lₒ₃, Lᵤ₃, Lₒ₄, Lᵤ₄) einer Halbbrücke (HB₁, HB₂, HB₃, HB₄) schalten.

5. Verfahren nach einem der Ansprüche 1 bis 4, **dadurch gekennzeichnet dass** die Faktoren z und m gleichgesetzt werden.

6. Verfahren nach Anspruch 2, **dadurch gekennzeichnet dass** falls der Ausgangsstrom (Iₐ) größer als eine zweite positive Ausgangsstromschwelle (I₂₊) oder kleiner als eine zweite negative Ausgangsstromschwelle (I₂₋) bleibt, der Synchronwandler (1) im Sperrmodus (M₁, M₂) verbleibt.

7. Verfahren nach einem der Ansprüche 1 bis 5, **dadurch gekennzeichnet dass** falls der Ausgangsstrom (Iₐ) kleiner als die eine erste positive Ausgangsstromschwelle (I₁₊) und größer als die erste negative Ausgangsstromschwelle (I₁₋) bleibt, der Synchronwandler (1) im Niedrigstrommodus (M₃) verbleibt.

8. Verfahren nach Anspruch 6 oder 7, **dadurch gekennzeichnet dass** die erste positive Ausgangsstromschwelle (I₁₊) der zweiten positiven Ausgangsstromschwelle (I₂₊) entspricht und/oder dass die erste negative Ausgangsstromschwelle (I₁₋) der zweiten negativen Ausgangsstromschwelle (I₂₋) entspricht.

9. Verfahren nach einem der Ansprüche 1 bis 8, **dadurch gekennzeichnet dass,** sobald der Tastgrad (S) bei aktivem Sperrmodus (M₁, M₂) oder Niedrigstrommodus (M₃) die obere Tastgradschwelle (Sₒ₁), bzw. die untere Tastgradschwelle (Sᵤ₁) kreuzt, der Synchronwandler (1) in den Normalmodus (M₀) geschaltet wird.

10. Verfahren nach einem der Ansprüche 1 bis 8, **dadurch gekennzeichnet dass** zumindest eine weitere Tastgradschwelle (Sₒ₂, Sᵤ₂) vorhanden ist, die näher bei 50% liegt als die obere Tastgradschwelle (Sₒ₁) bzw. die untere Tastgradschwelle (Sᵤ₁) **und dass** bei aktivem Sperrmodus (M₁, M₂) oder Niedrigstrommodus (M₃) der Synchronwandler (1) in den Normalmodus (M₀) geschaltet wird sobald der Tastgrad (S) die zweite weitere Tastgradschwelle (Sₒ₂, Sᵤ₂) kreuzt.

## Claims

1. A method for controlling a multi-phase synchronous converter (1) consisting of a plurality of half bridges (HB₁, HB₂, HB₃, HB₄), which in turn consist of an upper power switch (Lₒ₁, Lₒ₂, Lₒ₃, Lₒ₄) and a lower power switch (Lᵤ₁, Lᵤ₂, Lᵤ₃, Lᵤ₄), respectively, by a pulse width modulation dependent on a predetermined pulse duty cycle (S) in the range of zero to one hundred percent, wherein the synchronous converter (1) generates an output current (Iₐ) and the multi-phase synchronous converter (1) is operated in a normal mode (M₀), in which the power switches (Lₒ₁, Lᵤ₁, Lₒ₂, Lᵤ₂, Lₒ₃, Lᵤ₃, Lₒ₄, Lᵤ₄) switch with a normal switching period (T₀) defined by a predetermined normal switching frequency and a normal pulse duration (t₀, tᵤ), the normal pulse duration (t₀, tᵤ) being dependent on the actual pulse duty cycle (S), wherein, the multi-phase synchronous converter (1) is switched from the normal mode (M₀) into an operating mode (M₁, M₂, M₃) when the pulse duty cycle (S) exceeds an upper duty cycle threshold (Sₒ₁) or falls below a lower duty cycle threshold (Sᵤ₁), wherein in the operating mode (M₁, M₂, M₃) at least one of the power switches (Lₒ₁, Lᵤ₁, Lₒ₂, Lᵤ₂, Lₒ₃, Lᵤ₃, Lₒ₄, Lᵤ₄) of at least one half bridge (HB₁, HB₂, HB₃, HB₄) is permanently deactivated for a longer period of time than the normal switching period (T₀) **characterized in that** a second positive output current threshold (I₂₊) and a second negative output current threshold (I₁₋) are provided, wherein the output current (Iₐ) is sampled with a sampling period (Tₛ), **and that,** the synchronous converter (1) is switched into an operating low current mode (M₃) when the output current (Iₐ) is smaller than the second positive output current threshold (I₂₊) and larger than the second negative output current threshold (I₂₋), wherein in operating low current mode (M₃) the power switches (Lₒ₁, Lᵤ₁, Lₒ₂, Lᵤ₂, Lₒ₃, Lᵤ₃, Lₒ₄, Lᵤ₄) are switched with a switching period (T₃), which corresponds to the sampling period (Tₛ) increased by a factor z.

2. The method of claim 1, **characterized in that** the multi-phase synchronous converter (1) is switched in an operating blocking mode (M₁, M₂) when the output current (Iₐ) is larger than a first positive output current threshold (I₁₊) or smaller than a first negative output current threshold (I₁₋), wherein all lower power switches (Lᵤ₁, Lᵤ₂, Lᵤ₃, Lᵤ₄) or all upper power switches (Lₒ₁, Lₒ₂, Lₒ₃, Lo₄) are permanently deactivated, as long as the multi-phase synchronous converter (1) is in blocking mode (M₁, M₂).

3. The method of claim 1 or 2, **characterized in that** at least the upper or the lower power switches (Lₒ₁, Lᵤ₁, Lₒ₂, Lᵤ₂, Lₒ₃, Lᵤ₃, Lₒ₄, Lᵤ₄) are switched with a pulse duration (t₀, tᵤ), which corresponds to the pulse duration (t₀) increased by a factor m.

4. The method of any of claims 1 to 3, **characterized in that** within the sampling period (Tₛ) of output current Iₐ, only the power switches (Lₒ₁, Lᵤ₁, Lₒ₂, Lᵤ₂, Lₒ₃, Lᵤ₃, Lₒ₄, Lᵤ₄) of a half bridge (HB₁, HB₂, HB₃, HB₄) are switched.

5. The method of any of claims 1 to 4, **characterized in that** the factors z and m are set equal.

6. The method of claim 2, **characterized in that,** the synchronous converter (1) remains in the blocking mode (M₁, M₂) if the output current (Iₐ) remains larger than a second positive output current threshold (I₂₊) or smaller than a second negative output current threshold (I₂₋).

7. The method of any of claims 1 to 5, **characterized in that,** the synchronous converter (1) remains in the low current mode (M₃) if the output current (Iₐ) remains smaller than the one first positive output current threshold (I₁₊) and larger than the first negative output current threshold (I₁₋), then.

8. The method of claim 6 or 7, **characterized in that** the first positive output current threshold (I₁₊) corresponds to the second positive output current threshold (I₂₊) and/or that the first negative output current threshold (I₁₋) corresponds to the second negative output current threshold (I₂₋).

9. The method of any of claims 1 to 8, **characterized in that,** the synchronous converter (1) is switched into the normal mode (M₀) when the pulse duty cycle (S) crosses the upper duty cycle threshold (Sₒ₁) or the lower duty cycle threshold (Sᵤ₁), while the blocking mode (M₁, M₂) is active.

10. The method of any of claims 1 to 8, **characterized in that** at least one further duty cycle threshold (Sₒ₂, Sᵤ₂) is provided, which is closer to 50% than the upper duty cycle threshold (Sₒ₁) or the lower duty cycle threshold (Sᵤ₁) and that, while the blocking mode (M₁, M₂) or the low current mode (M₃) is active, the synchronous converter (1) is switched into the normal mode (M₀) when the duty cycle (S) crosses the second duty cycle threshold (Sₒ₂, Sᵤ₂).

## Revendications

1. Procédé de commande d'un convertisseur synchrone (1) polyphasé, constitué de plusieurs demi-ponts (HB₁, HB₂, HB₃, HB₄), eux-mêmes constitués, respectivement, d'un disjoncteur supérieur (Lₒ₁, Lₒ₂, Lₒ₃, Lo₄) et, respectivement, d'un disjoncteur inférieur (Lᵤ₁, Lᵤ₂, Lᵤ₃, Lᵤ₄), par une modulation de largeur d'impulsion en fonction d'un rapport cyclique (S) prédéterminé dans la plage de zéro à cent pour cent, un courant de sortie (Iₐ) étant généré par le convertisseur synchrone (1) et le convertisseur synchrone (1) polyphasé fonctionnant dans un mode normal (Mo) dans lequel les disjoncteurs (Lₒ₁, Lᵤ₁, Lₒ₂, Lᵤ₂, Lₒ₃, Lᵤ₃, Lₒ₄, Lᵤ₄) commutent avec une période de commutation normale (T₀) définie par une fréquence de commutation normale prédéterminée et une durée positive normale (t₀, tᵤ) dépendante du rapport cyclique (S) actuel, le convertisseur synchrone (1) polyphasé étant commuté du mode normal (M₀) à un mode de fonctionnement (M₁, M₂, M₃) dès que le rapport cyclique (S) dépasse un seuil de rapport cyclique supérieur (Sₒ₁) ou reste inférieur à un seuil de rapport cyclique inférieur (Sᵤ₁), mode de fonctionnement dans lequel au moins un des disjoncteurs (Lₒ₁, Lᵤ₁, Lₒ₂, Lᵤ₂, Lₒ₃, Lᵤ₃, Lₒ₄, Lᵤ₄) d'au moins un demi-pont (HB₁, HB₂, HB₃, HB₄) est désactivé en permanence pendant une période de temps supérieure à la période de commutation normale (T₀), **caractérisé en ce qu'**un second seuil de courant de sortie positif (I₂₊) et un second seuil de courant de sortie négatif (I₂₋) sont présents, le courant de sortie (Iₐ) étant échantillonné avec une période d'échantillonnage (Tₛ), **et en ce que,** si le courant de sortie (Iₐ) est inférieur au second seuil de courant de sortie positif (I₂₊) et est supérieur au second seuil de courant de sortie négatif (I₂₋), le convertisseur synchrone (1) est basculé en un mode de courant faible (M₃) en tant que mode de fonctionnement, par commutation des disjoncteurs (Lₒ₁, Lᵤ₁, Lₒ₂, Lᵤ₂, Lₒ₃, Lᵤ₃, Lₒ₄, Lᵤ₄) avec une période de commutation (T₃) qui correspond à la période d'échantillonnage augmentée d'un facteur z (Tₛ).

2. Procédé selon la revendication 1, **caractérisé en ce que,** si le courant de sortie (Iₐ) est supérieur à un premier seuil de courant de sortie positif (I₁₊) ou inférieur à un premier seuil de courant de sortie négatif (I₁₋), le convertisseur synchrone (1) polyphasé est basculé en un mode de blocage (M₁, M₂) en tant que mode de fonctionnement, par désactivation en permanence de tous les disjoncteurs inférieurs (L₁₂, L₂₂, L₃₂, L₄₂) ou tous les disjoncteurs supérieurs (Lₒ₁, Lₒ₂, Lₒ₃, Lₒ₄), tant que le convertisseur synchrone (1) polyphasé est en mode de blocage (M₁, M₂).

3. Procédé selon la revendication 1 ou 2, **caractérisé en ce qu'**au moins les disjoncteurs supérieurs ou inférieurs (Lₒ₁, Lᵤ₁, Lₒ₂, Lᵤ₂, Lₒ₃, Lᵤ₃, Lₒ₄, Lᵤ₄) sont commutés avec une durée d'impulsion (tₒ, tᵤ), laquelle correspond à la durée d'impulsion (t₀) augmentée d'un facteur m.

4. Procédé selon l'une des revendications 1 à 3, **caractérisé en ce que,** pendant la période d'échantillonnage (Tₛ) du courant de sortie (Iₐ), seuls les disjoncteurs (Lₒ₁, Lᵤ₁, Lₒ₂, Lᵤ₂, Lₒ₃, Lᵤ₃, Lₒ₄, Lᵤ₄) d'un demi-pont (HB₁, HB₂, HB₃, HB₄) commutent.

5. Procédé selon l'une des revendications 1 à 4, **caractérisé en ce que** les facteurs z et m sont correspondants.

6. Procédé selon la revendication 2, **caractérisé en ce que,** si le courant de sortie (Iₐ) reste supérieur à un second seuil de courant de sortie positif (I₂₊) ou inférieur à un second seuil de courant de sortie négatif (I₂₋), le convertisseur synchrone (1) reste en mode de blocage (M₁, M₂).

7. Procédé selon l'une des revendications 1 à 5, **caractérisé en ce que,** si le courant de sortie (Iₐ) reste inférieur au premier seuil de courant de sortie positif (I₁₊) et supérieur au premier seuil de courant de sortie négatif (I₁₋), le convertisseur synchrone (1) reste en mode de courant faible (M₃).

8. Procédé selon la revendication 6 ou 7, **caractérisé en ce que** le premier seuil de courant de sortie positif (I₁₊) correspond au second seuil de courant de sortie positif (I₂₊) et/ou **en ce que** le premier seuil de courant de sortie négatif (I₁₋) correspond au second seuil de courant de sortie négatif (I₂₋).

9. Procédé selon l'une des revendications 1 à 8, **caractérisé en ce que,** dès que le rapport cyclique (S), en mode de blocage (M₁, M₂) actif ou en mode de courant faible (M₃) actif, franchit le seuil de rapport cyclique supérieur (Sₒ₁) ou le seuil de rapport cyclique inférieur (Sᵤ₁), le convertisseur synchrone (1) est commuté en mode normal (M₀).

10. Procédé selon l'une des revendications 1 à 8, **caractérisé en ce qu'**au moins un seuil de rapport cyclique supplémentaire (Sₒ₂, Sᵤ₂) est présent, lequel est plus proche de 50 % que le seuil de rapport cyclique supérieur (Sₒ₁) ou le seuil de rapport cyclique inférieur (Sᵤ₁), **et en ce que**, en mode de blocage (M₁, M₂) actif ou en mode de courant faible (M₃) actif, le convertisseur synchrone (1) est commuté en mode normal (M₀) dès que le rapport cyclique (S) franchit le second seuil de rapport cyclique supplémentaire (Sₒ₂, Sᵤ₂).
